# EUROPEAN PATENT SPECIFICATION

(11) **EP 2 536 483 B1**
(45) Date of publication and mention of the grant of the patent: **31.05.2017**
(21) Application number: 11744198.0
(22) Date of filing: 18.02.2011
(51) Int. Cl.: B01D 53/18, B01D 53/62, B01J 19/08

(54) **SOLVENT TREATMENT PROCESS**
LÖSUNGSMITTELBEHANDLUNGSVERFAHREN
PROCÉDÉ DE TRAITEMENT DE SOLVANT

(30) Priority: 19.02.2010 AU 2010900664
(43) Date of publication of application: 26.12.2012
(73) Proprietor: Commonwealth Scientific and Industrial Research Organisation, Campbell, Australian Capital Territory 2612 (AU)
(72) Inventor: JACKSON, Phil, Mayfield West, New South Wales 2304 (AU); ATTALLA, Moetaz Ibrahim, Mayfield West, New South Wales 2304 (AU)
(74) Representative: Gill Jennings & Every LLP
(86) International application number: PCT/AU2011/000175
(87) International publication number: WO 2011/100801

(56) References cited:
- EP-A1- 2 665 542
- WO-A1-2009/065218
- JP-A- 11 258 160
- JP-A- 2010 036 148
- US-A- 4 780 287
- US-A1- 2004 126 293
- US-B1- 7 255 842

## Description

### Field of the invention

This invention relates to amines and their use in capturing carbon dioxide from gas streams.

### Background of the invention

There is growing pressure for stationary producers of greenhouse gases to dramatically reduce their atmospheric emissions. Of particular concern is the emission of carbon dioxide (CO₂) into the atmosphere. One method of reducing atmospheric CO₂ emissions is through its capture at a point source and subsequent storage in geological or other reservoirs.

The process for capturing CO₂ from power station and other combustion device flue gases is termed post combustion capture (PCC). In currently proposed post combustion capture processes, the CO₂ in flue gas is first separated from nitrogen and residual oxygen using a suitable solvent in an absorber. The solvent is usually an aqueous basic mixture containing components undergoing a chemical reaction with acid gases such as CO₂. It might contain amines (e.g. alkanolamines, ammonia, alkylamines) and/or inorganic salts (e.g. carbonate or phosphate). The CO₂ is subsequently removed from the solvent in a process called stripping (or regeneration), thus allowing the solvent to be reused. The stripped CO₂ is liquefied by compression and cooling, with appropriate drying steps to prevent hydrate formation. PCC in this form is applicable to a variety of stationary CO₂ sources including power stations, steel plants, cement kilns, calciners and smelters.

When CO₂ is absorbed into an aqueous solution containing an organic amine, a number of reactions can occur. The following equilibria are considered universal for solution-based CO₂ capture:

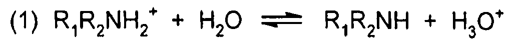

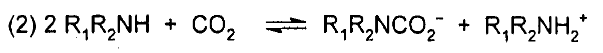

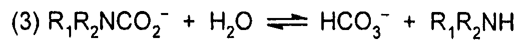

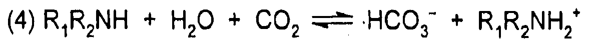

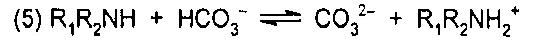

Here, R₁R₂NH is a typical capture amine in its native form, R₁R₂NH₂⁺ is the protonated form of the amine, R₁R₂NHCO₂⁻ is the carbamate derivative of the amine (a direct product of the amine reacting with CO₂), and HCO₃⁻ and CO₃²⁻ are bicarbonate and carbonate ions, respectively (indirect products of amine-catalysed CO₂ capture). The left-hand side of equation (5), above, is heavily favoured, so carbonate ion plays only a minor role in the capture chemistry of organic amines. The direct reaction between CO₂ and OH⁻ ions to form bicarbonate is slow, but this route to CO₂ capture is important for tertiary amines which cannot form a direct bond with the CO₂ molecule.

2-aminoethanol (monoethanolamine or 'MEA') is widely considered the best available amine for industrial CO₂ capture but has a number of limitations, including solvent degradation due to oxidation and high energy requirements needed to desorb the CO₂ and regenerate the MEA molecule for re-use. The use of amines as sorbents in CO₂ capture may be limited by the thermal degradation and oxidation of the amines, so most international research is focused towards the development of novel amine solvents for CO₂ capture.

The applicant has found that compounds such as nitramines, N-centred organic oxides, nitrosamines and organic nitrates are formed during the PCC process when CO₂ is brought into contact with amines and in particular primary and secondary amines. These compounds formed during contact of the flue gas with the capture solvent, and they accumulate in the CO₂ capture solvent as it is reused. Additionally during the contact between the CO₂ containing gas stream and the liquid phase solvent, solvent and the volatile by-products of reactions between CO₂ and the solvent transfer to the gas stream and are carried with the gas stream and if left untreated, are vented to the atmosphere. In the context of the invention, reference to a CO₂ capture solvent includes the solvent in the liquid phase, any gaseous phase solvent and any compounds absorbed, adsorbed or otherwise chemically combined or associated with the gaseous phase solvent molecules.

It is an object of the present invention to overcome or at least alleviate one or more of the problems associated with the formation of these compounds.

EP 2 665 542 A1 (ThyssenKrupp Uhde GMBH [DE]) discloses a method for reducing nitrosamines which form during the removal of CO₂ from flue gases using an aqueous amine solution, incorporating the use of UV light.

WO 2009/065218 A1 (Univ. Regina [CA]) discloses a method for inhibiting amine degradation during CO₂ capture from flue gas streams.

### Summary of the invention

Accordingly, in one aspect, the present invention provides a process of treating an amine based CO₂ capture solvent, the capture solvent having contacted a CO₂ containing gas stream, the process comprising the steps of
irradiating the amine based CO₂ capture solvent with light having a transmission band wavelength over the range of 190 - 450nm
wherein the light has a UV central spectral irradiance of greater than 1 x 10⁻⁶ W/cm² in continuous mode operation or greater than 100 x 10⁻⁶ W/cm² in pulsed- or flash-mode operation.

In preferred forms of the invention, the irradiating light has a transmission band wavelength in the regions 320-380 nm and 220-280 nm.

In an alternative preferred embodiment, the irradiating light has a transmission band wavelength in the regions 330-360 nm and 230-250 nm.

In a further preferred embodiment, the irradiating light has a transmission band wavelength over the range of 220-380 nm.

In yet a further embodiment, which preferably encompasses one or more of the preceding embodiment, the transmission of the band wavelength extends at least 50%, preferably at least 70%, even more preferably at least 85% and most preferably 100% over the range of 190 - 450 nm.

In the above embodiments, the light has a mean UV central spectral irradiance greater than 1 x 10⁻⁶ W/cm²; preferably at least 5 x 10⁻⁶ W/cm², and most preferably 5-50 x 10⁻⁶ W/cm² in continuous mode operation or preferably greater than 100 x 10⁻⁶ W/cm² in pulsed- or flash-mode operation.

Multiple lamps types, each with maximum central irradiance covering different wavelengths (e.g. 2, 3, 4, 5 or more) may be employed. This has the advantage of ensuring maximum possible degradation of harmful compounds which are sensitive to UV light.

In the most preferred embodiment, the maximum central spectral irradiance preferably occurs at a wavelength between 220 - 260 nm. A second light source may also be utilised with a maximum central spectral irradiance occurring between the wavelengths of 320-370 nm.

In another embodiment, the irradiating light is a monochromatic light source having a transmission band wavelength in the range of 220 - 270 nm, and/or 320 - 370 nm, has a UV central spectral irradiance of greater than 50 x 10⁻⁶ W/cm², preferably at least 100 x 10⁻⁶ W/cm², most preferably 100-1000 x 10⁻⁶ W/cm² in either continuous or pulsed mode operation

In the context of the invention, the CO₂ capture solvent and its degradation products, which may fall into the category of toxic chemicals described in lines 17-18, page 2, may be in the gaseous or liquid phase. Liquid phases of the CO₂ capture solvent includes solvent circulating in the PCC process and/or present in any other parts of the plant such as wash water used to recover amine. Solvent is irradiated at these UV light bandwidths and central spectral irradiances to ensure destruction of the toxic chemicals described in lines 17-18, page 2, however the path length of the radiation through any solution must be sufficiently short for adequate destruction, otherwise mirrors or reflective surfaces will be needed for multiple passes.

In the above process, it is preferable that the amine based CO₂ capture solvent is an aqueous primary, secondary or tertiary amine and most preferably a secondary amine. As all solvents (primary, secondary and tertiary) degrade over time when exposed to CO₂-containing flue gases, and many of these degradation products are demonstrated secondary amines (e.g. various oxazolidinones, bis(2-hydroxyethyl)urea), the process is not limited to irradiation of only the native or non degraded solvent, but extends to the irradiation of all potentially harmful amine degradation CO₂-capture by-products which appear over the life-time of the solvent and which comprise the chemical mixture used for CO₂ capture.

Preferably the treatment may be applied to amines which have been in contact with CO₂ for a minimum of 7 hours. In order to ensure that the by-products have been degraded to environmentally harmless compounds it is preferable that gaseous streams, including those containing solvent droplets, are exposed to UV light from a continuous source in the wavelength ranges specified above for a period greater than 3 seconds, preferably 4-25 seconds depending on the flue gas stack height and the spectral irradiance of the UV light source, and most preferably greater than 6 seconds. It is preferable that liquid streams containing solvent are exposed to UV light from a continuous source for a period greater than 20 seconds, preferably 21 seconds to 10 minutes, and most preferably greater than 1 minute. The pH of the solvent is preferably alkaline (8 or above) during the treatment process.

The contact between the amine based CO₂ capture solvent and flue gas results in the production of molecules selected from the group of molecules containing C,N,O atoms with -NO, -NNO, NNO₂ or -NO₃ groups covalently bonded directly to carbon atoms. Preferably the molecules are nitramines, N-centred organic oxides, nitrosamines, or organic nitrate derivatives of the primary, secondary or tertiary amines used as the CO₂ capture solvent.

Also disclosed herein is a process of capturing CO₂ from a CO₂ containing gas stream, comprising the steps of
(i) contacting a CO₂ containing gas stream with an amine based CO₂ capture solvent;
(i) irradiating the amine based CO₂ capture solvent with light having a transmission band wavelength over the range of 190 - 450nm.

In preferred forms of this aspect of the invention, the irradiating light has transmission wavelengths consistent with the preferred embodiments of the first aspect of the invention. The above process may also include process steps associated with PCC processes such as regeneration of the solvent, and any pre-treatment of the CO₂ containing gas stream to remove nitrogen and residual oxygen.

The CO₂ containing gas stream may be contacted with the amine based CO₂ capture solvent in a contacting vessel such as an absorption column or other liquid/gas contacting vessel. The step of irradiating the amine based CO₂ capture solvent may be conducted in the contacting vessel, or in the respective gaseous and liquid streams after CO₂ containing gas stream and the amine based CO₂ capture solvent have been brought into contact.

Also disclosed herein is an apparatus for capturing CO₂ from a CO₂ containing gas stream comprising
(i) a liquid gas contacting vessel for contacting a CO₂ containing gas stream with an amine based CO₂ capture solvent, the vessel having a gaseous exit stream for the treated CO₂ containing gas stream and a solvent exit stream, and
(ii) a light source configured to irradiate solvent in at least one of the contacting vessel, gaseous exit stream or solvent exit stream, the light source having a transmission band over the range of 190-450nm.

The irradiated light from a suitable light source will be incident upon the post combustion CO₂ capture solvent in the contacting vessel, solvent exit stream or streams or PCC exhaust gas stream exiting the contacting vessel. The apparatus may comprise UV light guides such as mirrors when required and if required the light guides may be arranged to provide several passes of the light through the solvent. Accordingly the method may require passing the light through the solvent two or more times.

The light source may be, but is not limited to, laser, discharge lamp, or incandescent lamp. The light source transmits light over the range of 190 - 450nm to destroy by photo-dissociation nitramines, N-centred organic oxides, nitrosamines, or organic nitrate derivatives of the primary or secondary amines used as the CO₂ capture solvent, but preferably over the range 220-450 nm, and at any or all spectral irradiance powers (W/cm²) greater than 1 x 10⁻⁶ W/cm²; preferably 5 x 10⁻⁶ W/cm²; and most preferably 5-50 x 10⁻⁶ W/cm² in continuous mode operation; preferably greater than 100 x 10⁻⁶ W/cm² in pulsed- or flash-mode operation. The preferred transmission band is 220-280nm. As the streams were solvent is present will have a combination of degradation products from the amine solvents, the light source irradiates the respective stream over the transmission band range. To accomplish this several light sources may be used whereby each light source has a specific transmission band width which combined preferably overlap and cover the full preferred range.

Preferred forms of this apparatus include a light source which transmits light over the ranges specified as preferred ranges in respect of the first and second aspects.

The process of the invention is suitable for use with all primary, secondary and tertiary amines currently in use and in particular includes MEA (monoethanolamine), DEA, diethanolamine, AMP (2-Amino-2-methylpropanol), PZ (Piperazine), methyldiethanolamine (MDEA), diglycolamine (DGA), and di-isopropanolamine (DIPA), and blends of any two or more of the above including MEA-piperazine blends, MDEA-piperazine blends, blends of N- methyldiethanolamine and triethylene tetramine and mixtures of primary amines which have partially degraded to secondary amines as occurs when MEA degrades to DEA and MOR . The chemical structures of amines most commonly used are shown below:

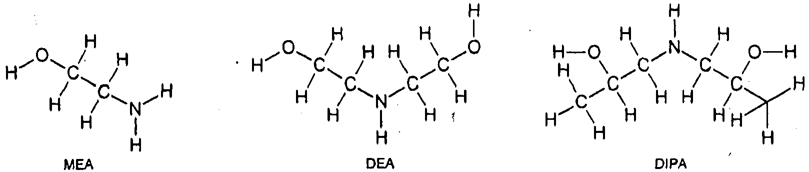

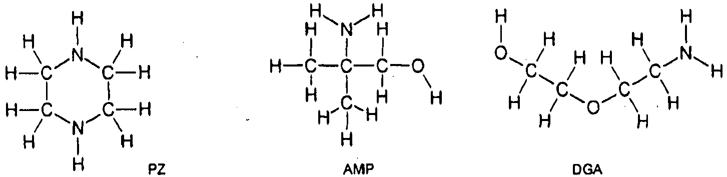

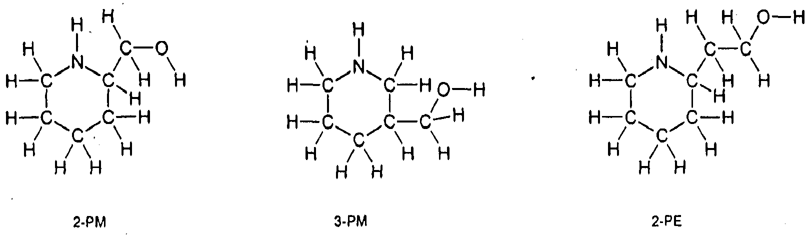

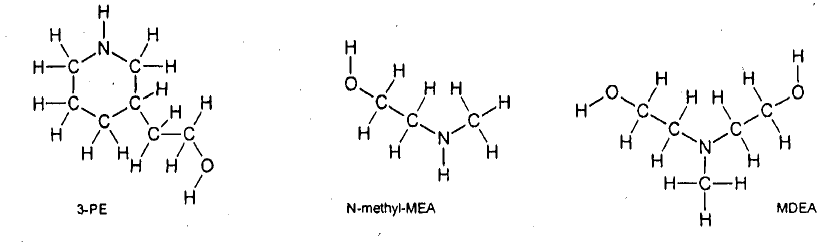

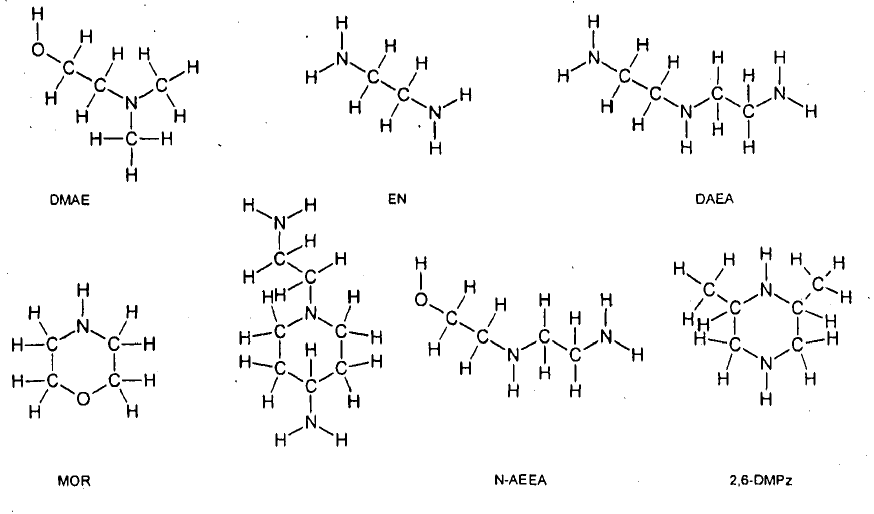

By-products of those amines include one or more of molecules selected from the group of molecules containing C,N,O atoms with -NO, -NNO, NNO₂ or -NO₃ groups covalently bonded directly to carbon atoms and in one or more of the molecules selected from the group of nitramines, N-centred organic oxides, nitrosamines, or organic nitrate derivatives of the above primary, secondary or tertiary amines.. The chemical structures of amine degradation products are as follows:

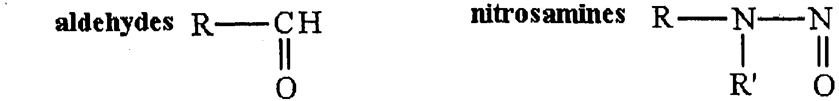

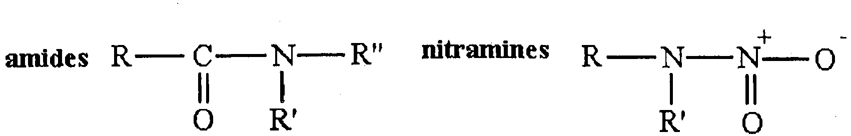

The invention is most preferably useful for treating one or more of the by-products selected from the list of N-nitrosopiperazine, N,N'-dinitrosopiperazine, N-nitropiperazine (a nitramine) and N-oxopiperazine in the case where piperazine is the solvent or a component of a blend; N-nitrosomorpholine or N-nitromorpholine when MOR is used as a solvent or as a component of a blend; N-nitrosodiethanolamine, (NDELA), N-nitromorpholine, 2,2'-(nitroimino)diethanol, and N-nitrosomorpholine when any of MEA, DEA, MDEA or TEA are used as solvents or as a component of a blend; 2-[methyl(nitroso)amino]ethanol, N-(2-hydroxyethyl)-N-nitrosoformamide, 1,3-bis(2-hydroxyethyl)-1-nitrosourea, 1,3-bis(2-hydroxyethyl)-1,3-dinitrosourea, 3-nitroso-1,3-oxazolidin-2-one when any of MDEA, MEA, TEA or N-methylMEA are used as solvents or as a component of a blend; 1,1'-(nitrosoimino)dipropan-2-ol and 1,1'-(nitroimino)dipropan-2-ol when DIPA is used in a solvent or as a component of a blend; 2-[methyl(nitroso)amino]propan-1-ol or 2-[methyl(nitro)amino]propan-1-ol when AMP is used as a solvent or as a component of a blend; (1-nitrosopiperidin-2-yl)methanol, (1-nitropiperidin-2-yl)methanol, 2-methyl-1-nitrosopiperidine, 2-methyl-1-nitropiperidine, N-nitropiperidine and N-nitrosopiperidine when 2-PM is used as a solvent or as a component of a blend; (1-nitrosopiperidin-3-yl)methanol, (1-nitropiperidin-3-yl)methanol, 3-methyl-1-nitrosopiperidine, 3-methyl-1-nitropiperidine, N-nitropiperidine and N-nitrosopiperidine when 3-PM is used as a solvent or as a component of a blend; 2-(1-nitrosopiperidin-3-yl)ethanol, 2-(1-nitropiperidin-3-yl)ethanol, 3-ethyl1-nitrosopiperidine, 3-ethyl1-nitropiperidine, 3-methyl-1-nitrosopiperidine, 3-methyl-1-nitropiperidine, N-nitropiperidine and N-nitrosopiperidine when 3-PE is used in a solvent or as a component of a blend; 2-(1-nitrosopiperidin-2-yl)ethanol, 2-(1-nitropiperidin-2-yl)ethanol, 2-ethyl1-nitrosopiperidine, 2-ethyl1-nitropiperidine, 2-methyl-1-nitrosopiperidine, 2-methyl-1-nitropiperidine, N-nitropiperidine and N-nitrosopiperidine when 2-PE is used in a solvent or as a component of a blend; N-methyl-N-nitrosoethane-1,2-diamine and N-(2-aminoethyl)-N-nitrosoethane-1,2-diamine when either EN and DAEA are used in a solvent or as a component of a blend; 2-[(2-aminoethyl)(nitroso)amino]ethanol or 2-[(2-aminoethyl)(nitro)amino]ethanol when N-AEEA, MEA or DEA are used as solvents or as a component of a blend; 2-(3,5-dimethyl-4-nitrosopiperazin-1-yl)ethanol for 2-(3,5-dimethyl-4-nitropiperazin-1-yl)ethanol when 2-(3,5-dimethylpiperazin-1-yl)ethanol is used as a solvent or blend component; 2,6-dimethyl-1-nitropiperazine, 2,6-dimethyl-1,4-dinitropiperazine, 2,6-dimethylnitrosopiperazine and 2,6-dimethyl-1,4-dinitrosopiperazine when 2,6-dimethylpiperazine is used as a solvent; N,N'-bis(2-aminoethyl)-N-nitrosoethane-1,2-diamine, N,N'-bis(2-aminoethyl)-N,N'-dinitrosoethane-1,2-diamine, N,N'-bis(2-aminoethyl)-N-nitro-N'-nitrosoethane-1,2-diamine and N,N'-bis(2-aminoethyl)-N,N'-dinitroethane-1,2-diamine when N,N'-bis(2-aminoethyl)ethane-1,2-diamine is used as a solvent or blend component.

The present invention also provides a use of UV irradiation technology at a temperature of 0-150°C for the destruction of nitramines, N-centred organic oxides, nitrosamines and organic nitrates in an amine based CO₂ capture solvent, the capture solvent having contacted a CO₂ containing gas stream, and wherein the use comprises irradiating the amine based CO₂ capture solvent with light having a transmission band wavelength over the range of 190 - 450nm. As used herein, except where the context requires otherwise, the term "comprise" and variations of the term, such as "comprising", "comprises" and "comprised", are not intended to exclude further additives, components, integers or steps.

### Brief description of the drawings / figures

Figure 1 is a schematic diagram of a generic PCC process;
Figures 2(a), 2(b), and 2(c) is a broad-scan positive-ion ESI-MS spectra derived from aqueous piperazine reaction mixtures exposed to synthetic flue gas for: (a) t = 3.5 hrs, (b) t = 7.0 hrs, and (c) t = 15.0 hrs;
Figure 3 (a) is retention time reproducibility chromatograms for N-nitrosopiperazine, (b) a plot of MS detector response versus N-nitrosopiperazine concentration for the MRM method used in the example, and (c) a plot of 'sample remaining versus exposure time' for N-nitrosopiperazine samples exposed to: (1) heat (150°C) and (2) broad-band UV light;
Figure 4 is the ESI-MS-MS spectrum of the piperazine degradation product N-oxopiperazine;
Figure 5 is the ESI-MS-MS spectrum of the piperazine degradation product N-nitropiperazine (a nitramine);
Figure 6 (A) is the broad-scan positive-ion ESI mass spectrum of a 30 % wt DEA solution degraded by exposure to synthetic flue gas. (B) is the MS-MS spectrum of M/z 135 which appears in Figure 6(A). The spectrum identifies the degradation product in 6(A) as N-nitrosodiethanolamine;
Figure 7(A) is the broad-scan positive-ion ESI mass spectrum of a 30 % wt MDEA solution degraded by exposure to synthetic flue gas. (B) is the MS-MS spectrum of M/z 136 which appears in Figure 7(A). The spectrum identifies the degradation product in 7(A) as the N-centred oxide of MDEA;
Figure 8 is the broad-scan positive-ion ESI mass spectrum of a 30 % wt MEA solution degraded by exposure to brown coal flue gas at an Australian PCC pilot plant. Peaks corresponding to diethanolamine (DEA) and morpholine (MOR), secondary amine degradation products of 2-aminoethanol (MEA), are identified in the spectrum;
Figure 9 is the ultraviolet absorption spectra of N-nitrosodiethanolamine (NDELA), N-nitrosomorpholine (NMOR), and N-nitrosopiperazine (NPz);
Figure 10(a), 10(b). 10(c), and 10(d) are embodiments of the treatment apparatus; and
Figures 11 is a schematic diagram of a UV treatment chamber incorporated into a PCC capture process.

### Detailed description of the embodiments

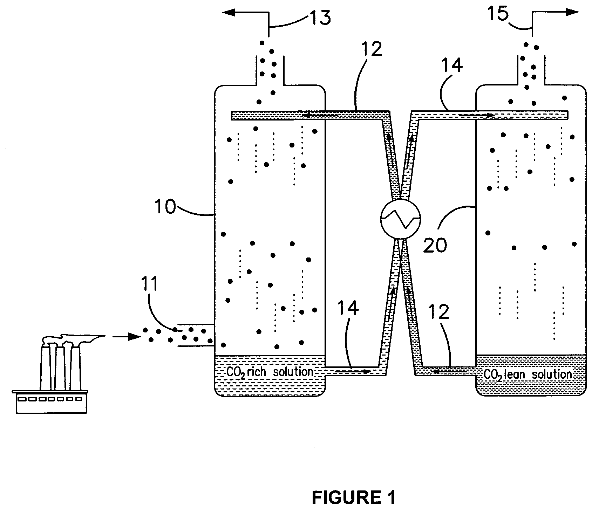

Referring to Figure 1 the absorption vessel (column appearing on the left-hand side of Figure) of a generic PCC process is shown. Flue gas may be derived from a variety of sources. In the case of a coal fired power station, the flue gas may have a CO₂ content of 10-15% at 1 atmosphere pressure. The flue gas 11 is fed to the absorption column 10 where it is contacted with a CO₂ solvent which enters through process stream 12. The temperature in the absorption column is typically 40-60°C. The solvent of the present invention is an amine based CO₂ capture solvent and is preferably (but not limited to) a primary, secondary or tertiary amine. The CO₂ in the flue gas stream 11 is absorbed by the capture solvent resulting in the exiting flue gas 13 being CO₂ lean and the solvent exiting the absorption column being rich in CO₂. The CO₂ rich capture solvent 14 then passes to a stripping column 20 where the reverse reaction occurs resulting a CO₂ lean solvent stream 12 and CO₂ being in a form 15 suitable for storage or use. Typically the temperature in the stripping column is 100-150°C and the CO₂ content in CO₂ stream 15 is ideally 99.9% CO₂ at 1.4-2 atmospheres.

Scheme 1 below shows possible capture reactions for piperizine.

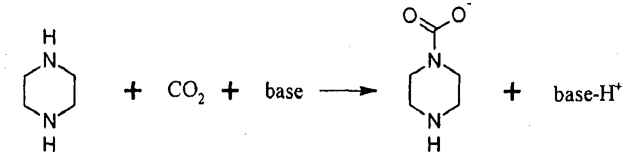

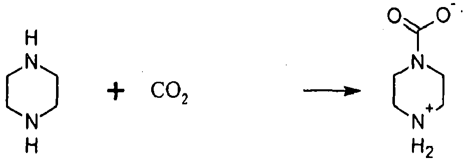

The applicant performed experiments to assess the performance of piperazine in relation to CO₂ removal from a synthetic flue gas stream. The pH of the solvent was 9 or above during the treatment process and CO₂ capture process.

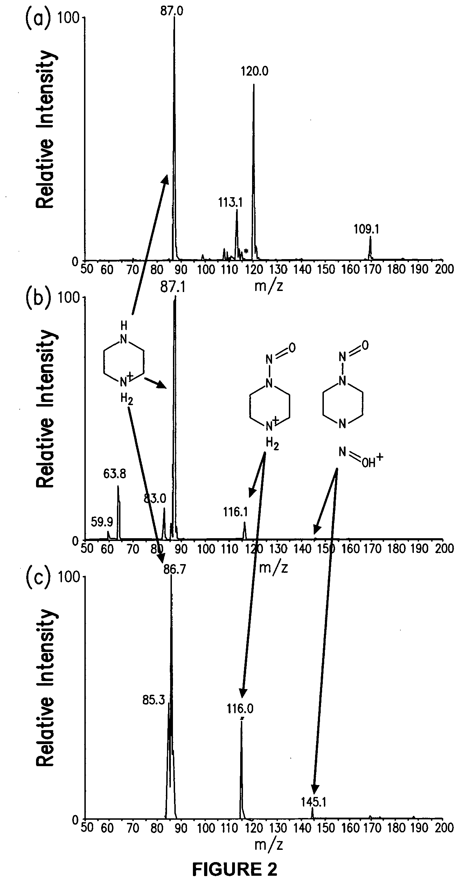

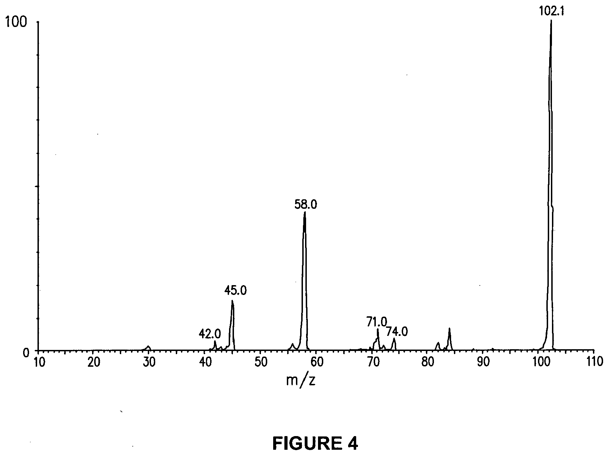

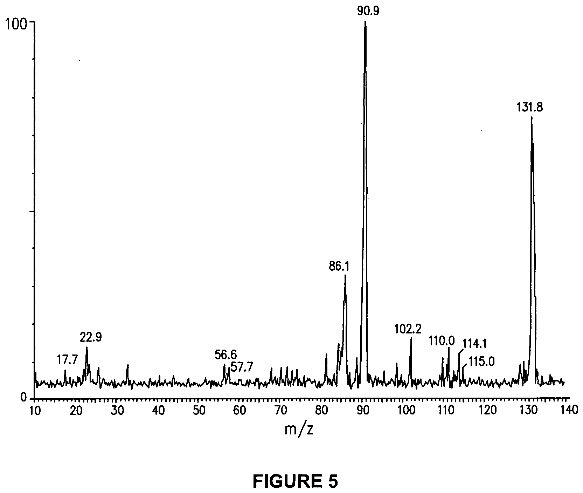

Figure 2(a), 2(b), and 2(c) is a broad-scan positive-ion ESI-MS spectra derived from aqueous piperazine reaction mixtures exposed to synthetic flue gas for: (a) t = 3.5 hrs, (b) t = 7.0 hrs, and (c) t = 15.0 hrs. The evolution of N-nitrosopiperazines (m/z 116, 145) is clear in (b) and (c). Figures 4 and 5 show the ESI-MS-MS spectra of the components of the degraded liquor which appear at M/z 102 and M/z 132 (respectively). The identity of these species is N-oxopiperazine (an organic N-oxide) and N-nitropiperazine (a nitramine).

Hence over a period of time, the amine begins to degrade producing nitrosamines, nitramines and an N-centred oxide. While the degradation of piperazine to nitrosopiperazine is illustrated, the degradation is equally evident with other primary, secondary and tertiary amines to nitramines, N-centred organic oxides, nitrosamines, or organic nitrates derivatives of those amines.

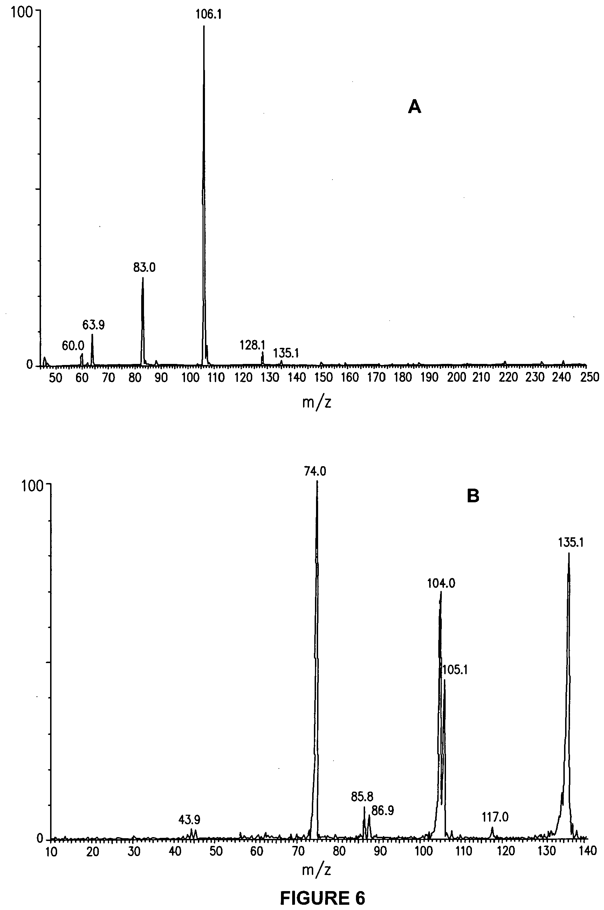

Figure 6(a) shows the broad-scan positive ion ESI-MS spectra of a diethanolamine (DEA) liquor exposed to a synthetic flue gas for 15 hrs. The peak at M/z 135 was selected and its identity confirmed as N-nitrosodiethanolamine (see Figure 6 (b)).

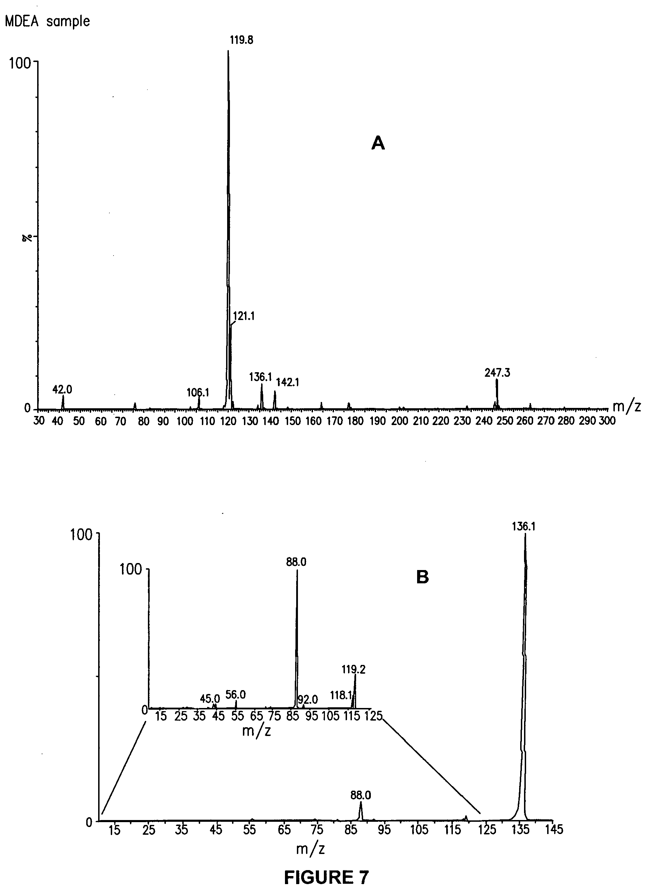

A common tertiary amine (N-methyldiethanolamine, MDEA) was also investigated. It too forms an N-centred oxide, as identified using MS-MS (see Figure 7 inset).

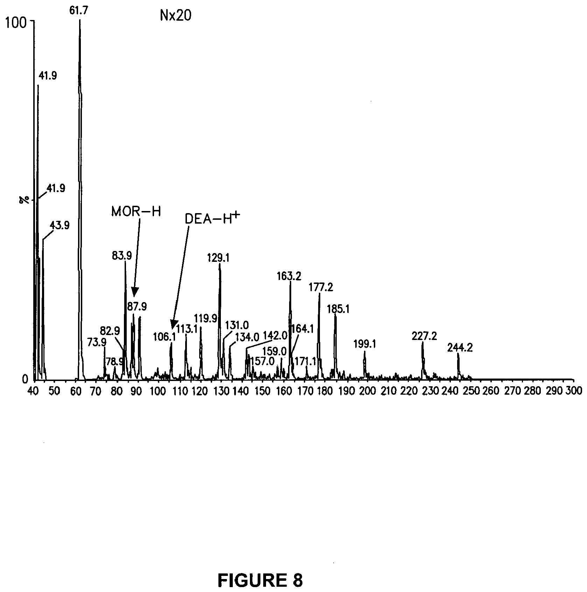

Figure 8 is a broad-scan positive ion ESI mass spectrum of a spent MEA solution from a CSIRO pilot plant. As indicated in the preceding text, MEA is a primary amine. It can undergo flue-gas induced degradation to form diethanolamine (DEA) and morpholine (MOR), which are secondary amines known to form nitrosamines (amongst other things). Peaks can be seen which appear at M/z 87.9 and M/z 106.1 in Figure 8. The identity of these peaks (DEA, MOR) was confirmed using MS-MS.

As nitramine, nitrosamine, organic nitrate derivatives of amines are generally toxic and carcinogenic, it is important to remove any such substances produced by the degradation of the CO₂ capture solvent from the solvent stream and from any solvent which volatilises into the gaseous stream before it is exhausted.

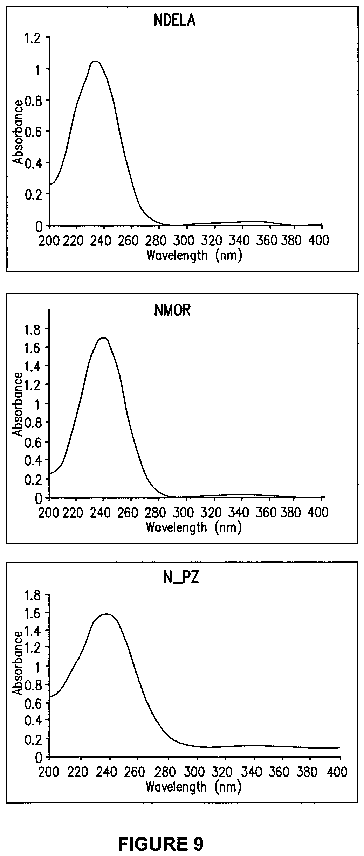

The applicant has found that many of the nitramine, nitrosamine, organic nitrate derivatives of amines can be degraded by subjecting the solvent to light in the transmission range of 190-450nm, preferably 220-450nm. This range is important because it corresponds to the wavelengths at which the N-NO bonds can be electronically and vibrationally excited to cause dissociation, or photolysis. The ultraviolet absorbance of several nitrosamines (versus wavelength) is shown in Figure 9.Figure 9(a) is the UV absorption profile of N-nitrosodiethanolamine in water. Maxima occur at 234 nm and 350 nm. Diethanolamine is sometimes used in amine formulations for the capture or scrubbing of CO2 from gas streams. Figure 9(b) is the UV absorption profile of N-nitrosomorpholine in water. Maxima occur at 238 nm and 355 nm. Morpholine can be found in degraded MEA solutions used to capture CO2. Figure 9(c) is the UV absorption profile of N-nitrosopiperazine in water. Maxima occur at 237 nm and 342 nm. Piperazine is a secondary CO2 capture solvent.

### Examples

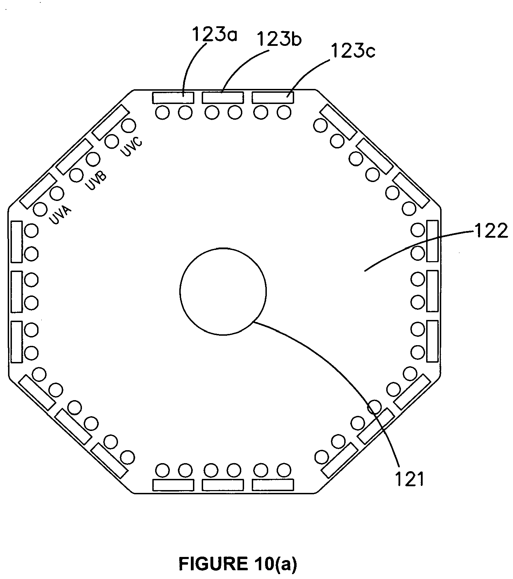

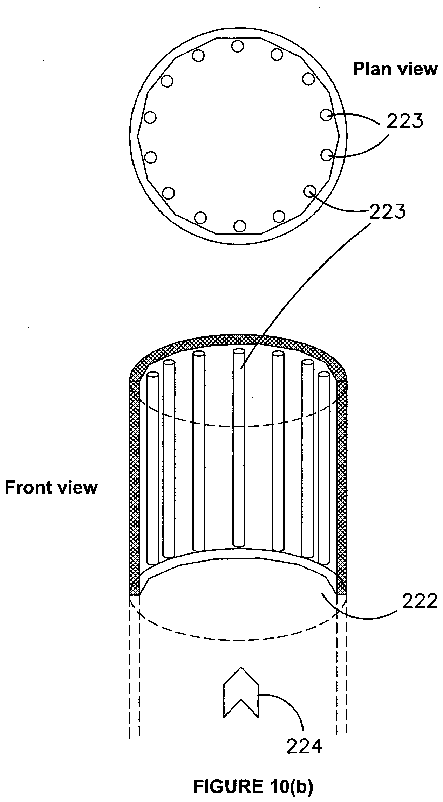

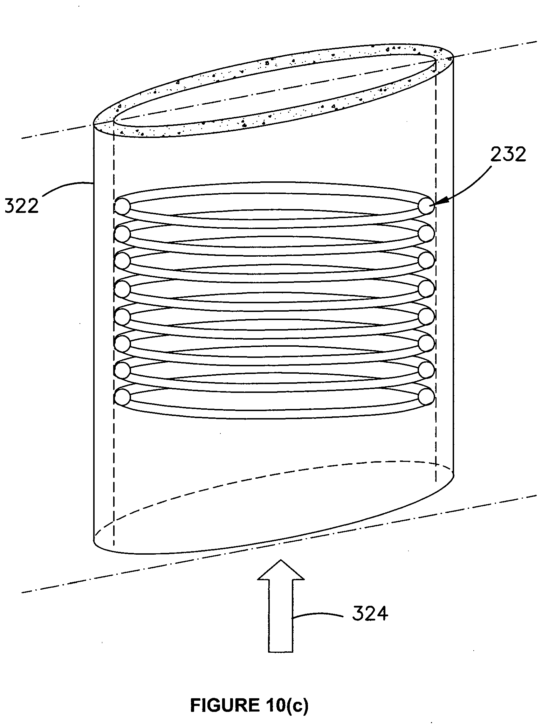

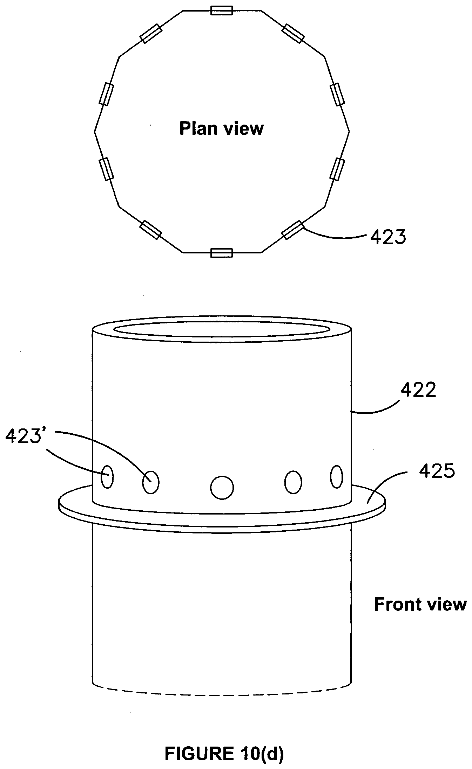

In order to investigate strategies to remove nitramine, nitrosamine, organic nitrate derivatives of amines from the capture solvent, the applicant performed some experiments in apparatus consisting of (i) a light source, (ii) a solvent vessel, and (iii) pumps, pipes, valves, regulators, monitoring equipment for the transport of post-combustion CO₂ capture solvent to/from the solvent vessel. Figure 10 shows a chamber to be used for the UV treatment of solvent.

### UV photolysis and thermal shock results

The aim of these experiments was to examine mitigation strategies for the removal of N-nitrosopiperazine from post-combustion capture liquors. Before proceeding to apply the method described above for the quantification of N-nitrosopiperazine in real experiments, some parameters were established for our chromatographic conditions.

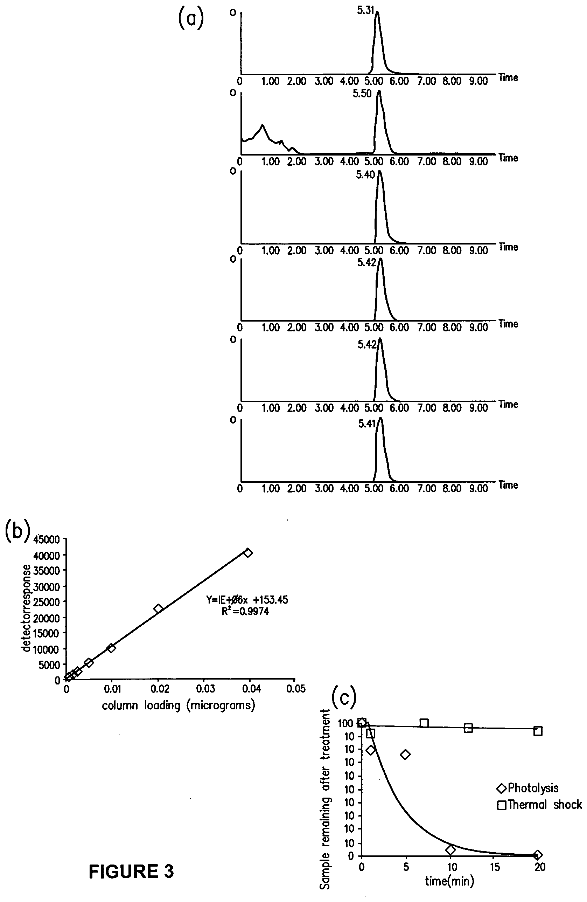

First, the variation of detector response linearity with N-nitrosopiperazine sample concentration was investigated. The MS-detector response was found to be linear over the sample loading range 40 ng to 615 pg (y = 10 x +153.5, R =0.9974), see Fig. 3(b). Second, retention time reproducibility was investigated using six consecutive 10 |xL injections of 0.5 |xg/ mL stock solution (5.0 ng column loading) with the mass spectrometer operated in full scan mode (see Fig. 3(a)), which yielded retention time (t_{R}) =5.42 ±0.12 min.

Our mass spectrometry method employing both NO and HNO loss transitions was then applied to study the effects of UV photolysis and thermal shock on N-nitrosopiperazine. The results are presented in Fig. 3(c), and were derived from test samples with an initial concentration of 2.6 mg/mL; the y-axis represents the percentage of sample remaining after exposure to heat or a broad-band UV light.

It is evident from the graph that there is little or no degradation of N-nitrosopiperazine upon heating the sample to 150°C for up to 20min (typical amine regeneration conditions in a CO₂ stripping tower), consistent with the established resistance of nitrosamines to thermal degradation. In contrast, the sample exposed to near-UV radiation does deteriorate. Nitrosopiperazine is thermally stable at 150°C, but may degrade when exposed to UV irradiation between 400-310 nm (maximum irradiance 2.6 mW/cm² at 350 nm).

The invention has specific application to PCC capture liquors or PCC exhaust gas streams. The invention employs the application of UV irradiation technology to an exhaust gas stream or amine-containing solvent at relatively low temperatures i.e. 0-150 °C (273-423 K) to for the destruction of nitramines, N-centred organic oxides, nitrosamines and organic nitrates in post-combustion capture solvents or post-combustion capture exhaust gas streams. These chemicals are molecules containing C,N,O atoms with -NO, -NNO, NNO₂ or -NO₃ groups covalently bonded directly to carbon atoms.. The vessel containing the CO₂ capture solvent/exhaust gas stream may or may not be mechanically agitated, mixed, sparged with gas, solvent cycled etc.

As the streams containing solvent will contain a number of degradation products even when a single amine is used to strip CO₂ from a flue gas stream, the invention employs a continuous spectrum of light in the range of 190-450nm, preferably 220-450, more preferably 220 - 300nm to further breakdown these by-products into compounds which are environmentally safe.

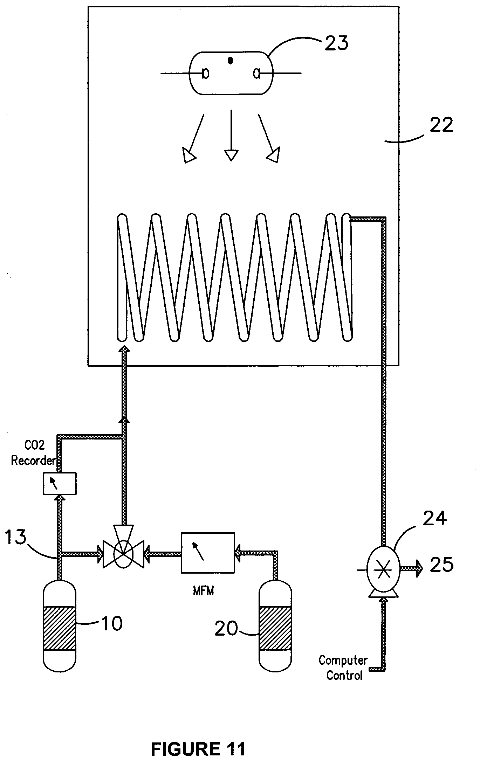

Figures 11 is a schematic diagram of a UV treatment chamber incorporated into a PCC capture process. In the bottom of figure 10 a PCC process similar to that shown in Figure 1 is shown. In accordance with an embodiment of the invention, CO₂ gas from the absorber column 10 is passed to a treatment apparatus 20. A CO₂ recorder is positioned in the line to record the CO₂ concentration leaving the absorption column 10. The apparatus comprises or consists of a series of conduits 21 within a treatment chamber 22. The conduits are produced from a suitably UV transparent material such as quartz or Teflon tubing wind through chamber 22.

Within chamber 22 is light source 23 which transmits light across the bandwidth required for treatment. In accordance with the invention, the band width is 190-450nm, more preferably 220-450 nm or the most preferred and minimum band width is 220-380nm. As there are few if any light sources which transmit across the full desired bandwidth, the light source will generally be a plurality of light sources which collectively overlap and cover the full desired bandwidth. This is desirable as there are a number of degradation products formed in the solvent mixture and so to ensure that all of the harmful degradation products are broken down, a broad band width is desirable rather than a light source or series of light sources which target particular the wave length of particular compounds.

The residence time in the chamber will depend on the light intensity of the light source, the transmissivity of the stream and the concentration of the by-products in the stream.

Figure 10(a), 10(b). 10(c), and 10(d) are embodiments of the treatment apparatus.

In the first embodiment of figure 10(a), chamber 122 shows banks of lights 123a, 123b, 123c (in this case twin 40W batons) arranged around the inner perimeter of the chamber 122. The treatment stream carrying conduit 121 is shown as being centrally located. While the arrangement of light sources is shown as being arranged around the conduit 121, the banks of light on several sides of the chamber 122 could be replaced with mirrors or a reflective surface.

In figure 10(b) the plan and front view of a second embodiment of the chamber is shown. The chamber 222 consists of a substantially hollow cylindrical vessel through which the flue gas flows or can be a section of the flue gas pipe or stack. A circular array of UV fluorescent tubes/batons is arranged around the periphery of the chamber and parallel to the axis of the chamber. In this embodiment the flue gas flows in the direction of arrow 224.

In figure 10 (c), a third embodiment of the chamber 22 shown in figure 11 is shown. In this embodiment, the chamber 322 is substantially cylindrical and the UV source is curved in a spiral around the wall of the vessel, pipe of flue stack. In this embodiment, the gas flows through the chamber in the direction of arrow 324.

Figure 10(d), is a plan and front view of a fourth embodiment of the chamber shown in figure 11. In this embodiment, the periphery of the chamber/pipe/stack 422 is provided with a plurality of portals 423' in which UV radiation source are located. The UV radiation sources 423 transmit light into the chamber/pipe/stack around the periphery of the chamber/pipe/stack.

In all of the above embodiments, once the stream has been treated, it is then pumped but pump 24 to exhaust 25.

While the above has been described with reference to the CO₂ gas stream from the absorption column, it is also within the scope of the invention to treat the solvent stream at an appropriate point in the process such as after it leaves the CO₂ stripper 20.

In a further embodiment, a UV light source may be positioned in the either or both the absorption or stripper columns to treat the solvent in the column. This has the advantage of reducing the additional capital costs needed to treat the solvent.

It will be understood that the invention disclosed and defined in this specification extends to all alternative combinations of two or more of the individual features mentioned or evident from the text or drawings. All of these different combinations constitute various alternative aspects of the invention.

## Claims

1. A process of treating an amine based CO₂ capture solvent, the capture solvent having contacted a CO₂ containing gas stream, the process comprising the steps of
irradiating the amine based CO₂ capture solvent with light having a transmission band wavelength over the range of 190 - 450nm,
wherein the light has a UV central spectral irradiance of greater than 1 x 10⁻⁶ W/cm² in continuous mode operation or greater than 100 x 10⁻⁶ W/cm² in pulsed- or flash-mode operation.

2. The process of claim 1 wherein the CO₂ capture solvent is in the gaseous or liquid phase.

3. The process of claim 1 wherein the light has a transmission band wavelength over the range of 220- 450nm.

4. The process of claim 1 wherein maximum central irradiance occurs at a wavelength between 220 - 260 nm and 320-370 nm

5. The process of claim 4 wherein the irradiating light is provided from two light sources transmitting light over the different transmission bandwidths.

6. The process of claim 1, wherein the light has a transmission band which extends at least 50% over the range of 190 -450nm

7. The process of claim 1 wherein the solvent is at least one selected from the group of MEA (monoethanolamine), DEA, diethanolamine, AMP (2-Amino-2-methylpropanol), PIPA (Piperazine), methyldiethanolamine (MDEA), diglycolamine (DGA), and di-isopropanolamine (DIPA), and blends thereof.

8. The process of claim 1 wherein the contact between the amine based CO₂ capture solvent and CO₂ results in the production of molecules selected from the group of molecules containing C,N,O atoms with -NO, -NNO, NNO₂ or -NO₃ groups covalently bonded directly to carbon atoms.

9. The process of claim 1 wherein the molecules are nitramine, N- centred organic oxide, nitrosamine, or organic nitrate derivatives of the primary, secondary or tertiary amines used as the CO₂ capture solvent.

10. Use of UV irradiation technology at a temperature of 0-150°C for the destruction of nitramines, N-centred organic oxides, nitrosamines and organic nitrates in an amine based CO₂ capture solvent, the capture solvent having contacted a CO₂ containing gas stream, and wherein the use comprises irradiating the amine based CO₂ capture solvent with light having a transmission band wavelength over the range of 190 - 450nm.

## Patentansprüche

1. Verfahren der Behandlung eines aminbasierten Lösungsmittel zur CO₂-Abtrennung, wobei das Abtrennungslösungsmittel mit einem CO₂-enthaltenden Gasstrom in Kontakt war, das Verfahren die folgenden Schritte umfasst:
Bestrahlen des aminbasierten Lösungsmittels zur CO₂-Abtrennung mit Licht, das eine Transmissionsbandwellenlänge über den Bereich von 190-450 nm aufweist,
wobei das Licht eine zentrale spektrale UV-Bestrahlungsstärke von größer als 1 x 10⁻⁶ W/cm² in kontinuierlicher Betriebsart oder größer als 100 x 10⁻⁶ W/cm² in Puls- oder Blitzbetriebsart aufweist.

2. Verfahren nach Anspruch 1, wobei das Lösungsmittel zur CO₂-Abtrennung in der Gas- oder Flüssigphase vorliegt.

3. Verfahren nach Anspruch 1, wobei das Licht eine Transmissionsbandwellenlänge über den Bereich von 220-450 nm aufweist.

4. Verfahren nach Anspruch 1, wobei die maximale zentrale Bestrahlungsstärke bei einer Wellenlänge zwischen 220-260 nm und 320-370 nm auftritt.

5. Verfahren nach Anspruch 4, wobei das einstrahlende Licht von zwei Lichtquellen bereitgestellt wird, die Licht über die verschiedenen Transmissionsbandbreiten übertragen.

6. Verfahren nach Anspruch 1, wobei das Licht eine Transmissionsbande aufweist, die sich mindestens 50 % über den Bereich von 190-450 nm erstreckt.

7. Verfahren nach Anspruch 1, wobei das Lösungsmittel mindestens eines ist, das aus der Gruppe von Folgenden ausgewählt ist: MEA (Monoethanolamin), DEA, Diethanolamin, AMP (2-Amino-2-methylpropanol), PIPA (Piperazin), Methyldiethanolamin (MDEA), Diglycolamin (DGA) und Diisopropanolamin (DIPA), und Gemischen davon.

8. Verfahren nach Anspruch 1, wobei der Kontakt zwischen dem aminbasierten Lösungsmittel zur CO₂-Abtrennung und CO₂ zur Erzeugung von Molekülen führt, die aus der Gruppe von Molekülen ausgewählt sind, die C-, N-, O-Atome mit -NO, -NNO, -NNO₂ oder -NO₃-Gruppen enthalten, die direkt zu Kohlenstoffatomen kovalent gebunden sind.

9. Verfahren nach Anspruch 1, wobei die Moleküle Folgendes sind: Nitramin, N-zentriertes organisches Oxid, Nitrosamin oder organische Nitratderivate der primären, sekundären oder tertiären Amine, die als Lösungsmittel zur CO₂-Abtrennung verwendet werden.

10. Verwendung von UV-Bestrahlungstechnologie bei einer Temperatur von 0-150 °C für die Zerstörung von Nitraminen, N-zentrierten organischen Oxiden, Nitrosaminen und organischen Nitraten in einem aminbasierten Lösungsmittel zur CO₂-Abtrennung, wobei das Abtrennungslösungsmittel mit einem CO₂-enthaltenden Gasstrom in Kontakt war, und wobei die Verwendung das Bestrahlen des aminbasierten Lösungsmittels zur CO₂-Abtrennung mit Licht, das eine Transmissionsbandwellenlänge über den Bereich von 190-450 nm aufweist, umfasst.

## Revendications

1. Procédé de traitement d'un solvant de captage du CO₂ à base d'amine, le solvant de captage ayant été mis en contact avec un flux gazeux contenant du CO₂, le procédé comprenant les étapes consistant à
irradier le solvant de captage du CO₂ à base d'amine avec une lumière ayant une longueur d'onde de bande de transmission dans le domaine situé entre 190 et 450 nm,
dans lequel la lumière a un éclairement énergétique spectral central dans l'ultraviolet supérieur à 1 x 10⁻⁶ W/cm² en fonctionnement en mode continu ou supérieur à 100 x 10⁻⁶ W/cm² en fonctionnement en mode pulsé ou en mode flash.

2. Procédé selon la revendication 1 dans lequel le solvant de captage du CO₂ est dans la phase gazeuse ou dans la phase liquide.

3. Procédé selon la revendication 1 dans lequel la lumière a une longueur d'onde de bande de transmission dans le domaine situé entre 220 et 450 nm.

4. Procédé selon la revendication 1, dans lequel l'éclairement énergétique central maximal se produit à une longueur d'onde dans le domaine situé entre 220 et 260 nm et entre 320 et 370 nm.

5. Procédé selon la revendication 4 dans lequel la lumière rayonnante est fournie par deux sources lumineuses transmettant de la lumière sur différentes largeurs de bandes de transmission.

6. Procédé selon la revendication 1, dans lequel la lumière a une bande de transmission qui s'étend d'au moins 50% dans le domaine situé entre 190 et 450 nm.

7. Procédé selon la revendication 1 dans lequel le solvant est au moins un solvant sélectionné dans le groupe constitué de la MEA (monoéthanolamine), de la DEA, diéthanolamine, du AMP (2-Amino-2-méthylpropanol), de la PIPA (Pipérazine), de la méthyldiéthanolamine (MDEA), de la diglycolamine (DGA) et de la diisopropanolamine (DIPA) et de mélanges de ceux-ci.

8. Procédé selon la revendication 1, dans lequel le contact entre le solvant de captage du CO₂ à base d'amine et le CO₂ résultant en la production de molécules sélectionnées dans le groupe constitué de molécules contenant des atomes de C, de N, de O avec des groupes -NO, -NNO, NNO₂ ou NO₃ liés de manière covalente directement à des atomes de carbone.

9. Procédé selon la revendication 1 dans lequel les molécules sont la nitramine, l'oxyde organique N-centré ou des dérivés du nitrate organique des amines primaires, secondaires ou tertiaires utilisées en tant que le solvant de captage du CO₂.

10. Utilisation de la technologie d'irradiation UV à une température de 0 à 150 °C pour la destruction de nitramines, d'oxydes organiques N-centrés, de nitrosamines et de nitrates organiques dans un solvant de captage du CO₂ à base d'amine, le solvant de captage ayant été mis en contact avec un flux gazeux contenant du CO₂, et l'utilisation comprenant l'irradiation du solvant de captage du CO₂ à base d'amine avec de la lumière ayant une longueur de bande de transmission dans le domaine situé entre 190 et 450 nm.
